# EUROPEAN PATENT APPLICATION

(11) **EP 1 985 588 A1**
(43) Date of publication of application: **29.10.2008**
(21) Application number: 07251736.0
(22) Date of filing: 25.04.2007
(51) Int. Cl.: C02F 1/10, B01D 1/14, C02F 103/08

(54) **Liquid purification system and method for purifying a liquid using liquid-to-liquid heating and cooling**

(71) Applicant: Aquitic Technology, Inc., West Chester, PA 19380 (US)
(72) Inventor: Kozac, Andrew F, III, Media, PA 19062 (US)
(74) Representative: Harris, Ian Richard

(57) **Abstract**

A liquid purification system includes a first vessel (20) having contained therein a first liquid (24) maintained at a first predetermined temperature. The system further includes a second vessel (40) containing the first liquid (42) therein at a second predetermined temperature. A second liquid (34) is heated through liquid-to-liquid contact with the first liquid (24) in the first tank (20). A purified form of the second liquid is transported to vessel (40) where the second liquid is condensed into substantially pure form of the liquid. The purified liquid is extracted from the second tank (40).

## Description

### BACKGROUND OF THE INVENTION

### 1. Field of the Invention

The invention described herein is related to the treatment of liquid compositions for removing one or more components thereof by successive heating and cooling. More specifically, the invention described herein utilizes liquid-to-liquid heat transfer in both heating and cooling stages of the treatment.

### 2. Description of the Prior Art

Purifying liquids, and separation of liquids from various compositions is a large field of technology having many varying applications. The purification of water, for instance, has tremendous importance in many parts of the World. Many populated areas of the World are heavily reliant on desalinization of sea water as the primary source of potable water. As such, numerous desalinization plants have been constructed in those parts of the World where fresh water supplies are scarce.

Of course, other applications of desalinization of sea water into potable water exist. A useful example is that of a submarine or other sea-going craft, where desalinization of sea water is preferred over the storage of potable water onboard the craft. The decision to implement a desalinization system as opposed to a fresh water storage system is made in large part with consideration to the space requirement of the respective water sources. Where a large quantity of potable water is required, space requirements may be reduced over those of water tanks by installing a desalinization system. Further complicating an onboard storage tank implementation is that as water is used and the tank is depleted, the empty space in the tank may be undesirable, especially in view of the corresponding temporal variability of the weight of the water. For example, on submarines, the variations in water levels in a tank affects the buoyancy of the ship and can complicate navigation.

Although several methods for desalinization exist, the more simpler and popular methods are based on distillation. In such processes, salt water is heated until the water is converted to steam, which is then condensed into potable water. The condensing stage is generally accomplished through a series of copper tubes through which the energy of the steam is given off as heat and eventually is converted back into a liquid. Such condensing systems can be quite large in order to allow enough heat to be removed from the steam so as to meet a continuous water demand. However, not all applications where desalinization is desired can accommodate the size requirements of such large systems. Thus, the need is felt in the liquid purification field for systems requiring smaller installation footprints.

### SUMMARY OF THE INVENTION

The invention is defined in the appended claims.

One embodiment of the present invention provides a liquid purification system having a first vessel containing a first liquid maintained at a first predetermined temperature. The first predetermined temperature is set to exceed the boiling point of a second liquid, where the second liquid is heated through contact with the first liquid. The first liquid and the second liquid are immiscible with respect to each other. The system further includes a second vessel also containing the first liquid, which is maintained at a second predetermined temperature below the condensation point of the second liquid. The second liquid is cooled through contact with the first liquid. The second liquid, e.g., salt water is input to the first vessel in an unpurified form, and the second liquid is expelled from the second vessel in a purified form, e.g., potable water.

In another embodiment of the invention, a liquid purification system includes a first vessel containing a first liquid in a first zone thereof and a second liquid in a second zone thereof. The first liquid and the second liquid are immiscible with respect to one another. A heater is coupled to the first vessel and is in communication with the first liquid so as to heat the first liquid to a first predetermined temperature. A second vessel, also containing the first liquid in a first zone thereof and a second liquid in a second zone thereof, is coupled to a cooler for cooling the first liquid to a second predetermined temperature. The system includes a conduit network coupled to the first vessel for inputting the second liquid in an unpurified state thereto and coupled to the second vessel for transporting the second liquid in a first heated state thereto and further coupled to the second vessel for expelling the second liquid in a purified state therefrom.

In yet another embodiment of the invention, a method is provided for purifying a liquid. A first liquid is provided to a first vessel and a second vessel. The first liquid is heated in the first vessel and is cooled in the second vessel. A second liquid is heated in the first vessel through contact with the first liquid contained therein and is cooled in the second vessel through contact with the first liquid contained therein. The second liquid is input to the first vessel and exits the second vessel in a purified state.

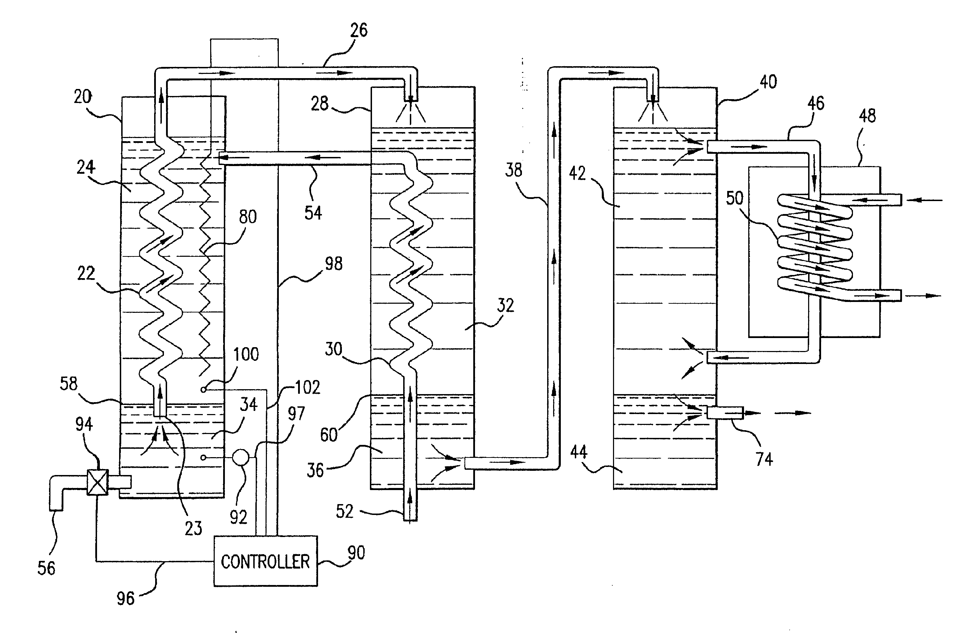

### BRIEF DESCRIPTION OF THE DRAWING

The FIGURE is a schematic diagram of an example system implemented in accordance with the present invention.

### DETAILED DESCRIPTION OF PREFERRED EMBODIMENTS

Various embodiments of the present invention are best described in view of the schematic diagram of the Figure. It is to be noted that while the following descriptions are made with reference to a desalinization application of the present invention, the system of the present invention is not so confined and may be used in a wide variety of applications. The desalinization application described below is used for descriptive purposes and is not intended to imply limitation of the invention to any specific application.

As shown in the Figure, the present invention includes a first vessel, illustrated as liquid column 20 (also referred to herein as tank 20), having contained therein a first liquid 24. In certain embodiments of the present invention, the first liquid is a polysiloxane, such as silicone. Certain silicones have among their beneficial properties stability at high temperature and immiscibility with water.

In tank 20, the silicone 24 is heated to a temperature that exceeds the boiling point of a second liquid, such as water, which is the desired product of the exemplary embodiment of the invention. In certain embodiments of the present invention, the heating is accomplished through an immersion heater 80 to a temperature of approximately 300°F. The second liquid in its unpurified state, such as salt water, is input to column 20 via a conduit 54. The salt water, having a higher specific gravity than the silicone 24, and being immiscible with the silicone 24, descends down the column 20 by force of gravity where it is pooled in a second zone of column 20, as indicated at 34. As the salt water descends down the column 20, it is heated by liquid-to-liquid contact with the silicone 24. In the steady state the liquid in the tank 20 consists of a first zone of silicone 24 and of a second zone of salt water 34, the two zones being separated by a meniscus 58.

As is shown in the Figure, the column 20 has installed therein a coiled conduit 22 having a lower end 23 thereof extending into the lower portion of the column 20, and particularly into the salt water bath 34 formed below meniscus 56. The conduit 22 extends upwardly from its lower end 23, passes through the heated silicone 24 and is coupled to an external conduit 26. The pre-heated salt water 34 is driven by fluidic pressure through the conduit 22 and flows upwardly against gravitational force toward the external conduit 26. In so doing, heat is transferred to the salt water therein to the point where the water is converted to steam. The steam in external conduit 26 is then essentially pure water vapor and a brine solution falls toward the lower section of the tank 20 into the salt water bath 34.

Excluding for the moment the description of the center tank 28, embodiments of the present invention further include a second vessel, illustrated as column 40 (also referred to herein as tank 40), for containing a volume 42 of the first liquid, e.g., silicone, in a first zone thereof. In column 40, the silicone 42 is cooled to a temperature below the condensation point of the purified water entering through conduit 38. The temperature of the silicone 42 in the second tank 40 is cooled by a cooler such as heat exchange unit 48. As is typical with heat exchangers of the art, heat exchanger 48 uses a refrigerant device such as the cooling coil 50 to extract heat from the fluid entering by conduit 46 to a predetermined temperature. In certain embodiments of the present invention, the heat exchanger 48 is operable to maintain the silicone bath 42 in the second tank 40 at a temperature of approximately 50°F.

As was the case in the first column, the water entering the second column 40 via conduit 38 is both immiscible with and has a higher specific gravity than the silicone 42. As such, as the water condenses, it falls through the silicone bath 42 and is cooled through liquid-to-liquid contact therewith. The liquid water forms in a second zone in the lower portion of the tank 40 as a pool 44 of potable water having an approximate temperature of 70°F. The potable water is then extracted from the second tank 40 by an output conduit 74.

In certain embodiments of the present invention, the purification system includes a third tank 28 also containing a silicone bath 32 in a region above a purified water bath 36. The third tank 28 provides a step down in temperature of the purified water prior to proceeding to second tank 40. As is shown in the Figure, steam entering tank 28 through conduit 26 is incident on the silicone bath 32. The silicone bath 32 is heated by the steam, thereby depleting the steam of some of its energy. The steam entering tank 28 is then at least partially condensed through liquid-to-liquid contact with silicone bath 32 and subsequently falls under the influence of gravity towards the lower zone of the tank 28. Thus, as shown in the Figure, the lower zone of tank 28 is occupied by a potable water bath 36 and the two zones are separated by a meniscus 60. In the exemplary embodiment, steam entering tank 28 at a temperature in excess of 212°F can heat the silicone bath 32 to a temperature of 150°F. Thus, the water in the water bath 36 is stored in the lower zone of tank 40 at a temperature of 150°F. Water from the water bath 36 is driven under fluidic pressure into conduit 38, where it is transported to column 40. In column 40, it is further cooled as described above.

In certain embodiments of the present invention, the liquid in the tank 28 may be used to preheat the incoming salt water prior to being introduced to tank 20. As is illustrated in the diagram of the Figure, salt water enters the system at inlet 52 and is forced through coiled conduit 30 by an external force, such as a pump (not shown). In conduit 30, heat from the silicone bath 32, which is heated by the steam entering tank 28, is transferred to the solution carried therein. The preheated salt water solution is then transferred to external conduit 54, which transports the preheated salt water, to tank 20.

As previously described, the steam is created in conduit 22 of tank 20 and concentrated saline solution is left behind by the process. As such, salt water bath 34 may eventually contain an unacceptably high salt concentration so as to chemically over load the silicone. However, a certain salinity is desired because of the heat retention quality of brine. Thus, in certain embodiments of the present invention, means are provided for maintaining a predetermined salinity in the salt water bath 34. In the embodiment shown in the Figure, a pH monitor 92 is coupled to a controller 90 via a transmission line 97. Through the pH monitor 92, the pH of the solution 34 is measured. When the pH as measured by the pH monitor 92 reaches a predetermined threshold value which, in certain embodiments, is between 7 and 8, controller 90 transmits a signal over transmission line 96 to a valve 94. The signal causes the valve 94 to open and a certain volume of brine solution from salt water bath 34 is extracted through outlet 56. The valve will remain open, under control of controller 90, until a predetermined pH value, such as 9, is measured by pH monitor 92. Obviously, there are many ways to maintain a certain salinity in the salt water bath 34, the foregoing being merely one example thereof.

As shown in the Figure, certain embodiments of the system include a controller 90 for controlling various aspects of the invention. The controller 90 can be programmed to maintain the salinity of the solution 34, as described above, as well as many other functions, such as maintaining the temperature of the silicone in one or more of the tanks 20, 28, 40. For example, controller 90 may be coupled to a temperature measuring device 100, such as a thermistor or digital thermometer, through transmission line 102. Based on the temperature measured by the thermistor 100, power is provided to immersion heater 80 through conductor 98 so as to maintain the desired temperature in tank 20. Again, there are several ways of maintaining the temperature in one or more of the tanks 20, 28, 40 - the foregoing being merely a suggestion of one possible method. Controller 90 may be any known controller circuit, such as an industrial type controller well-known in the art.

The descriptions above are intended to illustrate possible implementations of the present invention and are not restrictive. Many variations, modifications, and alternatives will become apparent to the skilled artisan upon review of this disclosure. For example, components equivalent to those shown and described may be substituted therefor, elements and methods individually described may be combined, and elements described as discrete may be distributed across many components. The system may, for example, be used to decontaminate liquids of other contaminates than those exemplified. The scope of the invention should therefore be determined not with reference to the description above, but with reference to the appended Claims, along with their full range of equivalence.

## Claims

1. A liquid purification system comprising:
a first vessel having contained therein a first liquid maintained at a first temperature, said second liquid being heated through contact with said first liquid, said first liquid and said second liquid being immiscible each with respect to the other, said second liquid having a higher specific gravity than said first liquid; and
a second vessel having contained therein said first liquid maintained at a second temperature, said second liquid being cooled through contact with said first liquid, wherein said second liquid is input to said first vessel in an unpurified form and said second liquid is expelled from said second vessel in a purified form.

2. The liquid purification system as recited in Claim 1, further including a third vessel having contained therein said first liquid at a third temperature, wherein said second liquid heated in said first vessel is cooled by said first liquid in said third vessel prior to being input to said second vessel.

3. The liquid purification system as recited in Claim 2, wherein said third vessel includes an inlet for inputting said second liquid thereto, wherein said second liquid is preheated by said first liquid in said third vessel prior to being input to said first vessel.

4. The liquid purification system as recited in any preceding Claim, wherein said first vessel includes a heater for maintaining said first liquid at said first temperature.

5. The liquid purification system as recited in any preceding Claim, wherein said second vessel is coupled to a heat exchanger for maintaining said first liquid at said second temperature.

6. A liquid purification system comprising:
a first vessel containing a first liquid in a first zone thereof and containing a second liquid in a second zone thereof, said first liquid and said second liquid being immiscible each with respect to the other, said second liquid having a higher specific gravity than said first liquid;
a heater coupled to said first vessel and in communication with said first liquid contained therein for heating said first liquid to a first predetermined temperature;
a second vessel containing said first liquid in a first zone thereof and said second liquid in a second zone thereof;
a cooler coupled to said second vessel and in communication with said first liquid contained therein for cooling said first liquid to a second predetermined temperature; and
a conduit network coupled to said first vessel for inputting said second liquid in an unpurified state thereto and coupled to said second vessel for transporting said second liquid in a first heated state thereto, said conduit network further coupled to said second vessel for expelling said second liquid in a purified state therefrom.

7. The liquid purification system of Claim 6 further including a third vessel containing said first liquid in a first zone thereof and said second liquid in a second zone thereof, wherein said conduit network is coupled to said third vessel so as to input said second liquid in a second heated state thereto and to transport said second liquid in said first heated state therefrom.

8. The liquid purification system of Claim 7, wherein said conduit network is further coupled to said third vessel so as to input said second liquid in said unpurified state thereto and to transport said second liquid in a preheated unpurified state therefrom, said second liquid in said preheated unpurified state being input to said first vessel.

9. The liquid purification system as recited in any preceding Claim, wherein said first vessel includes a valve for expelling a volume of said second liquid therefrom upon an indication of a predetermined condition.

10. The liquid purification system as recited in Claim 9, wherein said first vessel includes a pH monitor for determining a pH level of said second liquid in said first vessel, a predetermined pH level being said predetermined condition on which said volume of said second liquid is expelled from said first vessel.

11. The liquid purification system as recited in Claim 10, wherein said first liquid is a silicone.

12. The liquid purification system as recited in Claim 11, wherein said second liquid is saltwater.

13. The liquid purification system as recited in Claim 12, wherein said predetermined pH level is between 7 and 8.

14. A method for purifying a liquid comprising the steps of:
providing a first liquid in a first vessel and in a second vessel;
heating said first liquid in said first vessel;
cooling said liquid in said second vessel;
heating a second liquid in said first vessel through contact with said first liquid contained therein, said second liquid having a higher specific gravity than said first liquid; and
cooling said second liquid in said second vessel through contact with said first liquid contained therein, whereby said second liquid input into said first vessel is purified upon exiting said second vessel.

15. The method for purifying a liquid as recited in Claim 14, further comprising the steps of:
providing said first liquid to a third vessel;
heating said second liquid in said third vessel through contact with said first liquid contained therein prior to said second, liquid heating step of said first vessel; and
cooling said second liquid in said third vessel through contact with said first liquid contained therein prior to said second liquid cooling step of said first vessel.
